(19) Europäisches Patentamt
European Patent Office
Office européen des brevets

(11) EP 4 628 513 A1

(12) EUROPEAN PATENT APPLICATION
published in accordance with Art. 153(4) EPC

(43) Date of publication:
08.10.2025 Bulletin 2025/41

(21) Application number: 23897560.1

(22) Date of filing: 17.11.2023

(51) International Patent Classification (IPC):
C08F 210/02 (2006.01)  C08F 2/01 (2006.01)
C08F 220/10 (2006.01)  C08K 5/54 (2006.01)
C08L 23/08 (2025.01)  C08L 83/10 (2006.01)

(52) Cooperative Patent Classification (CPC):
C08F 2/01; C08F 210/02; C08F 220/10; C08K 5/54;
C08L 23/08; C08L 83/10

(86) International application number:
PCT/JP2023/041497

(87) International publication number:
WO 2024/116909 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.11.2022 JP 2022191629

(71) Applicant: Sumitomo Chemical Company, Limited
Tokyo 103-6020 (JP)

(72) Inventor: KITAGAWA, Sho
Ichihara-shi, Chiba 299-0195 (JP)

(74) Representative: Vossius & Partner
Patentanwälte Rechtsanwälte mbB
Siebertstrasse 3
81675 München (DE)

(54) ETHYLENE-(METH)ACRYLATE COPOLYMER, METHOD FOR PRODUCING SAME, AND COMPOSITION

(57) An ethylene-(meth)acrylate copolymer of the present invention has a decomposition onset temperature, as measured by thermogravimetry-differential thermal analysis under the conditions under air and at a temperature-rise rate of 20.0°C/min, of 350°C or higher.

Fig. 1

## Description

Technical Field

The present invention relates to an ethylene-(meth)acrylate copolymer, a method for producing the same, and a composition.

Background Art

Polymers are used for molded articles in various applications. For example, Patent Literatures 1 and 2 disclose that electric wire coating layers are formed from polymer compositions.

Citation List

Patent Literature

    Patent Literature 1: Japanese Patent Laid-Open No. 8-50810
    Patent Literature 2: Japanese Patent Laid-Open No. 2020-015812

Summary of Invention

Problems to be Solved by Invention

There are some cases where when films are formed from polymers, defects (hereinafter, referred to as "fish eye" in some cases) looking like shapes of eyes of fish are generated.

The present invention has been achieved in consideration of such a real situation, and has an object to provide an ethylene-(meth)acrylate copolymer capable of forming a film reduced in the number of fish eyes, and a composition using the copolymer. The present invention also has an object to provide a method for producing the ethylene-(meth)acrylate copolymer.

Means to Solve the Problems

The present invention relates to the ethylene-(meth)acrylate copolymer having a decomposition onset temperature, as measured by thermogravimetry-differential thermal analysis under the conditions under air and at a temperature-rise rate of 20.0°C/min, of 350°C or higher. According to such an ethylene-(meth)acrylate copolymer, films reduced in the number of fish eyes can be formed.

It is preferable that the ethylene-(meth)acrylate copolymer has a weight-average molecular weight Mw of 90,000 or lower and a content of the structural unit derived from (meth)acrylate of 20 to 30% by mass. According to such an ethylene-(meth)acrylate copolymer, films reduced in the number of fish eyes can be formed, and the flowability when the ethylene-(meth)acrylate copolymer is molded into films and the transparency of the films can be enhanced.

The present invention also relates to the composition comprising a polymer particle containing the ethylene-(meth)acrylate copolymer and a silicon compound adhered on the surface of the polymer particle. According to such a composition, films reduced in the number of fish eyes can be formed and the mutual adhesion of the polymer particles can be reduced.

It is preferable that the composition contains 20 ppm by mass or more in terms of dimethylsiloxane of the silicon compound with respect to the mass of the polymer particle. Thereby, the mutual adhesion of the polymer particles can further be reduced.

The ethylene-(meth)acrylate copolymer is preferably an ethylene-methyl methacrylate copolymer.

The present invention also relates to the method for producing the ethylene-(meth)acrylate copolymer, the method comprising polymerizing ethylene and (meth)acrylate in a tank reactor which has an upper reaction region and a lower reaction region and in which a fluid flows from the upper reaction region to the lower reaction region, wherein to the tank reactor, flows F1 to Fn (n is an integer of 2 or more) containing ethylene and (meth)acrylate are fed in respective ratios of R1 to Rn and respective temperatures $T_i1$ to $T_in$; and the temperature is measured at a position downstream from the middle point in the flow direction of the lower reaction region, and with the temperature being represented by T4,

$\Delta T_2$ calculated by the following expression (I) is 150°C or higher. According to such a method, the ethylene-(meth)acrylate copolymer can easily be produced.

[Expression 1]

$$\Delta T_2 = T4\,[°C] - \sum_{k=1}^{n} (Rk \times T_ik\,[°C])$$

$$\cdots (\text{I})$$

wherein the ratio Rk (k is an integer of 1 or more and n or less) represents a mass flow of the flow Fk with respect to the total mass flow of the flows F1 to Fn.

In the method for producing the ethylene-(meth)acrylate copolymer, it is preferable that at least one of the flows F1 to Fn is fed to the upper reaction region, and at least one of the flows F1 to Fn is fed to the lower reaction region. In the method for producing the ethylene-(eth)acrylate copolymer, n is preferably 3 or more.

In the method for producing the ethylene-(meth)acrylate copolymer, the temperature is measured at a position upstream from the middle point in the flow direction of the lower reaction region, and with the temperature being represented by T3, $\Delta T_1$ calculated by the following expression (II) is preferably 12°C or higher.

$$\Delta T_1 = T4\ [°C] - T3\ [°C] \ ... \ (\text{II})$$

Effects of Invention

According to the present invention, there are provided an ethylene-(meth)acrylate copolymer capable of forming films reduced in the number of fish eyes, and a composition using the copolymer. Further, according to the present invention, there is provided a method for producing the ethylene-(meth)acrylate copolymer.

Brief Description of Drawing

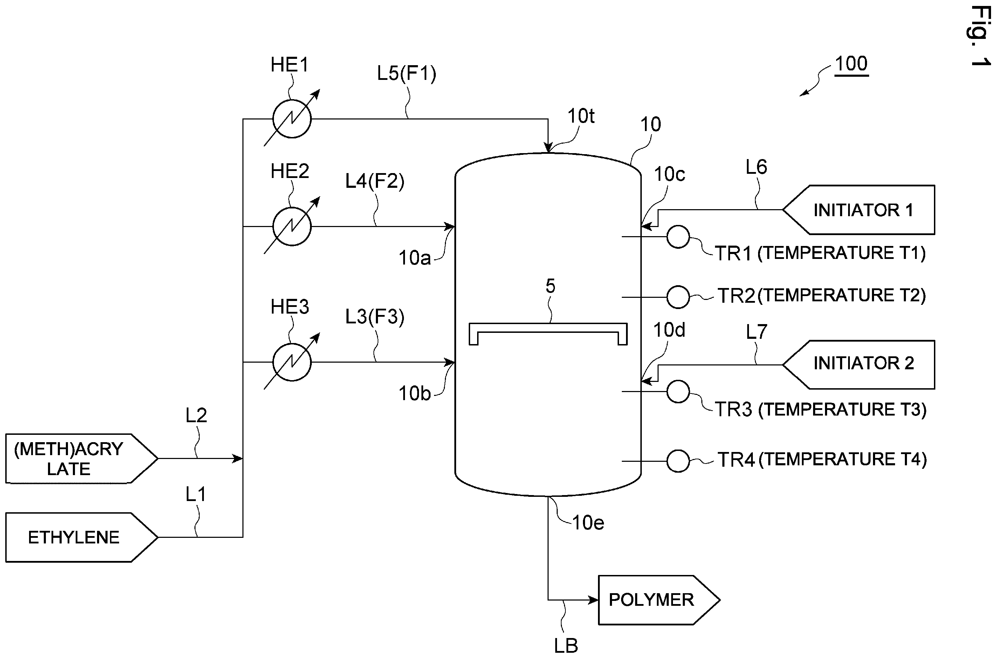

[Figure 1] Figure 1 is a diagram to interpret a method for producing an ethylene-(meth)acrylate copolymer.

Embodiments for Carrying out Invention

Hereinafter, embodiments of the present invention will be described in detail, as required, with suitable reference to the drawing. The dimensional ratio in the drawing is not limited to the ratio shown in the drawing.

[Ethylene-(meth)acrylate copolymer]

An ethylene-(meth)acrylate copolymer according to the present embodiments has a decomposition onset temperature, as measured by thermogravimetry-differential thermal (TG-DTA) analysis under the conditions under air and at a temperature-rise rate of 20.0°C/min, of 350°C or higher. According to such an ethylene-(meth)acrylate copolymer, films reduced in the number of fish eyes can be formed.

The decomposition onset temperature can be determined by using a weight loss curve obtained by measurement, using a high-temperature type simultaneous thermogravimetric and differential thermal analyzer, under the conditions under the air atmosphere, at a flow rate of 200 ml/min and at a temperature-rise rate of 20.0°C/min, and taking, as the decomposition onset temperature, a temperature of the intersection of a line of the mass before the measurement initiation and the maximum gradient tangent of the TG curve, according to JIS K7120.

More specifically, the decomposition onset temperature can be determined based on the procedure of the following 1 to 3.

1: A line (a-b) parallel to an abscissa passing through a mass of 0 before initiation of test heating is drawn.
2: A tangent (c-d) is drawn so that the gradient between inflection points in the TG curve becomes maximum.
3: The temperature of a point at which the line (a-b) and the tangent (c-d) intersect is taken as the decomposition onset temperature.

The decomposition onset temperature, from the viewpoint of easily further reducing fish eyes, may be, for example, 355°C or higher, or 360°C or higher. The decomposition onset temperature may be, for example, 500°C or lower, 450°C or lower, or 400°C or lower. The decomposition onset temperature may be, for example, 350 to 500°C, 355 to 450°C, or 360 to 400°C.

In the present description, "(meth)acrylate" is a general term of acrylate and methacrylate.

Examples of (meth)acrylate include methyl methacrylate, ethyl methacrylate, n-propyl methacrylate, isopropyl methacrylate, n-butyl methacrylate, isobutyl methacrylate, t-butyl methacrylate, hexyl methacrylate, octyl methacrylate, methyl acrylate, ethyl acrylate, n-propyl acrylate, n-butyl acrylate, t-butyl acrylate and isobutyl acrylate.

Examples of the ethylene-(meth)acrylate copolymer include ethylene-methyl acrylate copolymers, ethylene-ethyl acrylate copolymers, ethylene-n-propyl acrylate copolymers, ethylene-isopropyl acrylate copolymers, ethylene-n-butyl acrylate copolymers, ethylene-t-butyl acrylate copolymers, ethylene-isobutyl acrylate copolymers, ethylene-methyl methacrylate copolymers, ethylene-ethyl methacrylate copolymers, ethylene-n-propyl methacrylate copolymers, ethylene-isopropyl methacrylate copolymers, ethylene-n-butyl methacrylate copolymers, ethylene-t-butyl methacrylate copolymers and ethylene-isobutyl methacrylate copolymers.

The content of the structural unit derived from (meth)acrylate in the ethylene-(meth)acrylate copolymer, from the viewpoint of easily enhancing the transparency of films, may be, for example, 5% by mass or higher, 10% by mass or higher, or 20% by mass or higher. The content of the structural unit derived from (meth)acrylate in the ethylene-(meth) acrylate copolymer, from the viewpoint of retaining the crystallinity of the ethylene-(meth)acrylate copolymer, may be, for example, 50% by mass or lower, 40% by mass or lower, or 30% by mass or lower. The content of the structural unit derived from (meth)acrylate in the ethylene-(meth)acrylate copolymer may be, for example, 5 to 50% by mass, 10 to 40% by mass, or 20 to 30% by mass.

The content of the structural unit derived from ethylene in the ethylene-(meth)acrylate copolymer may be, for example, 50% by mass or higher, 60% by mass or higher, or 70% by mass or higher. The content of the structural unit derived from ethylene in the ethylene-(meth)acrylate copolymer may be, for example, 95% by mass or lower, 90% by mass or lower, or 80% by mass or lower. The content of the structural unit derived from (meth)acrylate in the ethylene-(meth) acrylate copolymer may be, for example, 50 to 95% by mass, 60 to 90% by mass, or 70 to 80% by mass.

The weight-average molecular weight Mw of the ethylene-(meth)acrylate copolymer, from the viewpoint of easily forming films therefrom, may be, for example, 10,000 or higher, 20,000 or higher, or 30,000 or higher. The weight-average molecular weight Mw of the ethylene-(meth)acrylate copolymer, from the viewpoint of easily enhancing the flowability in molding, may be, for example, 250,000 or lower, 90,000 or lower, or 80,000 or lower. The weight-average molecular weight Mw of the ethylene-(meth)acrylate copolymer may be, for example, 10,000 to 250,000, 20,000 to 90,000, or 30,000 to 80,0000.

The weight-average molecular weight (Mw) is measured by using gel permeation chromatography (GPC) under the following conditions, and means a value determined by using polystyrenes as the standard material.

Measurement device: HLC-8321 (product name, manufactured by Tosoh Corp., GPC/HT type)
Separation column: two columns of TSKgel GMH6-HT (column size: inner diameter: 7.5 mm, length: 300 mm) and two columns of TSKgel GMH6-HTL (column size: inner diameter: 7.5 mm, length: 300 mm)
Column temperature: 140°C
Mobile phase: orthodichlorobenzene (manufactured by Wako Pure Chemical Industries, Ltd.) (containing 0.025% by weight of BHT (manufactured by Wako Pure Chemical Industries, Ltd.) as an antioxidant)
Flow rate: 1.0 mL/min
Sample concentration: 30 mg/20 mL
Sample injection volume: 0.4 mL
Detector: differential refractometer
Standard sample: TSK polystyrene standards, manufactured by Tosoh Corp.

In the ethylene-(meth)acrylate copolymer, from the viewpoint of easily enhancing the flowability when the copolymer is molded into films and the transparency of films, it is preferable that the weight-average molecular weight Mw is 90,000 or lower and the content of the structural unit derived from (meth)acrylate is 20 to 30% by mass.

In the ethylene-(meth)acrylate copolymer, the melt flow rate (MFR), as measured according to the method prescribed in JIS K7210-1995 under the conditions of a load of 21.18 N and a temperature of 190°C, may be, for example, 500 g/10 min or lower, 300 g/10 min or lower, or 200 g/10 min or lower. The melt flow rate may be, for example, 1 g/10 min or higher.

The ethylene-(meth)acrylate copolymer is, from the viewpoint of being little in odors and high in thermal decomposition temperature, preferably an ethylene-methyl methacrylate copolymer.

[Composition]

A composition of the present embodiments comprises a polymer particle containing the ethylene-(meth)acrylate copolymer and a silicon compound adhered on the surface of the polymer particle. The composition of the present embodiments is, for example, a particulate composition. According to the composition of the present embodiments, films reduced in the number of fish eyes can be formed and the mutual adhesion of the polymer particles can be reduced. Therefore, according to the composition, films few in fish eyes can be produced stably and highly productively.

The content of the ethylene-(meth)acrylate copolymer in a polymer constituting the polymer particle may be, for example, 90% by mass or higher, 95% by mass or higher, or 99% by mass or higher. The content of the ethylene-(meth) acrylate copolymer with respect to the total mass of the polymer particle may be, for example, 90 to 100% by mass, 95 to 100% by mass, 99 to 100% by mass, or 100% by mass.

The polymer particle is, for example, a pellet. The particle size of the polymer particle is not limited, but may be, for example, 0.01 mm or larger, 0.1 mm or larger, or 1 mm or larger. The particle size may be, for example, 20 mm or smaller, 10 mm or smaller, or 5 mm or smaller. The particle size of the polymer particle may be 0.01 to 20 mm, 0.1 mm to 10 mm, or 1 mm to 5 mm.

Examples of the silicon compound include siloxanes typified by polydimethylsiloxane, silicon monoxide, silicon dioxide, silicic acid, silicon nitride, silicon carbide, silicate salts, silicon tetraoxide, silanes and cyclic siloxanes.

The composition may contain the silicon compound, from the viewpoint of easily further reducing the mutual adhesion of the polymer particles, with respect to the mass of the polymer particle, for example, in 20 ppm by mass or more, in 25 ppm by mass or more, or in 30 ppm by mass or more. The composition may contain the silicon compound, in terms of dimethylsiloxane with respect to the mass of the polymer particle, for example, in 300 ppm by mass or less, in 200 ppm by mass or less, or in 100 ppm by mass or less. The composition may contain the silicon compound, in terms of dimethylsiloxane with respect to the mass of the polymer particle, for example, in 20 to 300 ppm by mass, in 25 to 200 ppm by mass, or in 30 to 100 ppm by mass. It is preferable that the composition contains the silicon compound, in terms of dimethylsiloxane with respect to the mass of the polymer particle, in 20 ppm by mass or more.

Here, the mass in terms of dimethylsiloxane of the silicon compound refers to a mass of dimethylsiloxane having Si atoms in the same amount as the silicon compound.

[Method for producing the ethylene-(meth)acrylate copolymer]

The ethylene-(meth)acrylate copolymer according to the present embodiments can be produced, for example, by a method comprising a polymerization step of polymerizing ethylene and (meth)acrylate with an initiator.

The kind of the initiator is not especially limited, but examples thereof include t-butyl peroxypivalate, t-butyl peroxy-2-ethylhexanoate and t-butyl peroxyisopropylcarbonate. The initiator may be used singly in one kind, or may be used concurrently in two or more kinds.

Such an ethylene-(meth)acrylate copolymer as having a decomposition onset temperature of 350°C or higher is conceivably high in randomness of the structural unit derived from (meth)acrylate. Accordingly, in the polymerization step, it is conceivably preferable, for example, to regulate the conditions so that the randomness of the structural unit derived from (meth)acrylate becomes high. Conceivable examples of regulatable conditions are a feed method of a raw material containing ethylene and (meth)acrylate, a feed method, the kind and the amount of the initiator, the reaction temperature and the reaction pressure.

Then, one example of the method for producing the ethylene-(meth)acrylate copolymer will be described.

This method comprises polymerizing ethylene and (meth)acrylate in a tank reactor which has an upper reaction region and a lower reaction region and in which a fluid flows from the upper reaction region to the lower reaction region, wherein to the tank reactor, flows F1 to Fn (n is an integer of 2 or more) containing ethylene and (meth)acrylate are fed in respective ratios of R1 to Rn and respective temperatures $T_i1$ to $T_in$; and the temperature is measured at a position downstream from the middle point in the flow direction of the lower reaction region, and with the temperature being represented by T4, $\Delta T_2$ calculated by the following expression (I) is 150°C or higher. According to such a method, the ethylene-(meth)acrylate copolymer of the present embodiments can easily be produced.

[Expression 2]

$$\Delta T_2 = T4 [°C] - \sum_{k=1}^{n} (Rk \times T_i k [°C])$$

$$\cdots (I)$$

wherein the ratio Rk (k is an integer of 1 or more and n or less) represents a mass flow of the flow Fk with respect to the total mass flow of the flows F1 to Fn.

In this method, the temperature is measured at a position upstream from the middle point in the flow direction of the lower reaction region, and with the temperature being represented by T3, $\Delta T_1$ calculated by the following expression (II) is preferably 12°C or higher.

$$\Delta T_1 = T4\ [°C] - T3\ [°C] \ \cdots \ (II)$$

The $\Delta T_2$ may be, for example, 155°C or higher, 160°C or higher, or 165°C or higher. The $\Delta T_2$ may be, for example, 200°C or lower, 195°C or lower, or 190°C or lower.

The $\Delta T_1$ may be, for example, 14°C or higher, 16°C or higher, or 18°C or higher. The $\Delta T_1$ may be, for example, 30°C or lower, 28°C or lower, or 25°C or lower.

The T4 may be, for example, 200°C or higher, 210°C or higher, or 220°C or higher. The T4 may be, for example, 300°C or lower, 275°C or lower, or 250°C or lower.

The T3 may be, for example, 188°C or higher, 198°C or higher, or 208°C or higher. The T3 may be, for example, 288°C or lower, 263°C or lower, or 238°C or lower.

The temperatures $T_i1$ to $T_in$ may be, for example, 50°C or higher. The temperatures $T_i1$ to $T_in$ may be, for example, 100°C or lower.

The mass ratios (ethylene/(meth)acrylate) of ethylene and (meth)acrylate in the flows F1 to Fn may be, for example, 10 or higher. The mass ratios (ethylene/(meth)acrylate) of ethylene and (meth)acrylate in the flows F1 to Fn may be, for example, 50 or lower.

In this method, it is preferable that at least one of the flows F1 to Fn is fed to the upper reaction region, and at least one of the flows F1 to Fn is fed to the lower reaction region.

In this method, n is preferably 3 or more. n may be, for example, 5 or less, and may be 3.

For this method, for example, a production apparatus 100 as shown in Figure 1 can be used.

The production apparatus 100 shown in Figure 1 has mainly a reactor 10. The reactor 10 is a tank reactor which has an upper reaction region and a lower reaction region, and in which a fluid flows from the upper reaction region to the lower reaction region. The reactor 10 is divided into two reaction regions (the upper reaction region and the lower reaction region) by a baffle (baffle 5). Thereby, flowing of a polymer obtained by reaction from the lower reaction region to the upper reaction region is suppressed. The reactor 10 further has a stirrer which stirs the content of the reactor (not shown in figure) and the baffle 5 is connected to the stirrer.

The reactor 10 has five inlet ports (10t, 10a, 10b, 10c, 10d) and one outlet port (10e); and a raw material containing ethylene and (meth)acrylate is fed from three inlet ports (inlet ports 10t, 10a and 10b) among these inlet ports, and initiators (initiators 1 and 2) are fed from two inlet ports (inlet ports 10c and 10d). The inlet port 10t is installed on the tower top. The inlet ports 10a and 10c are installed on the region (the upper reaction region) upper than the baffle 5. The inlet ports 10b and 10d are installed on the region (the lower reaction region) lower than the baffle 5. In the reactor 10, ethylene and (meth)acrylate are copolymerized with the initiators. The polymer obtained by the reaction is discharged through the outlet port 10e installed on the tower bottom of the reactor 10 to a line LB.

Ethylene and (meth)acrylate are passed through a line L1 and a line L2, respectively, and merged, thereafter pressurized to a predetermined pressure by a compressor (not shown in figure), and distributed to lines L3 (flow F3), L4 (flow F2) and L5 (flow F1) equipped with heat exchangers HE3, HE2 and HE1 and fed from the inlet ports 10b, 10a and 10t to the reactor 10, respectively. The initiator 1 is fed through a line 6 from the inlet port 10c to the reactor 10, and the initiator 2 is fed through a line 7 from the inlet port 10d to the reactor.

The reactor 10 is equipped with four thermometers TR1, TR2, TR3 and TR4 in order from the top. The thermometers TR1 and TR2 are installed on the region upper than the baffle 5, and TR3 and TR4 are installed on the region lower than the baffle 5. The thermometer TR1 measures a temperature T1 of a position upstream of the middle point in the flow direction in the upper reaction region; the thermometer TR2 measures a temperature T2 of a position downstream of the middle point in the flow direction in the upper reaction region; the thermometer TR3 measures a temperature T3 of a position upstream of the middle point in the flow direction in the lower reaction region; and the thermometer TR4 measures a temperature T4 of a position downstream of the middle point in the flow direction in the lower reaction region. Then, the inlet port 10c of the initiator 1 is installed at a position in proximity to the thermometer TR1; and the inlet port 10d of the initiator 2 is installed at a position in proximity to the thermometer TR3.

The production apparatus 100 is conceivably easy in regulation and the like of respective feed ratios and temperatures of the raw material (ethylene and (meth)acrylate) to be fed from the inlet ports 10t, 10a and 10b and respective kinds and amounts of the initiators to be fed to the inlet ports 10c and 10d. Therefore, according to such an apparatus, it is conceivable that the ethylene-(meth)acrylate copolymer according to the present embodiments can easily be produced.

Then, one example of the method for producing the ethylene-(meth)acrylate copolymer by using the production apparatus 100 will be described.

First, the flows F1 to F3 containing ethylene and (meth)acrylate are fed through the lines L5, L4 and L3 in ratios R1 to R3 and temperatures $T_i1$ to Ti3 to the reactor 10, respectively. Here the R1 represents a mass flow of the flow F1 with respect to the total mass flow of the flows F1 to F3; the R2 represents a mass flow of the flow F2 with respect to the total mass flow of the flows F1 to F3; and the R3 represents a mass flow of the flow F3 with respect to the total mass flow of the flows F1 to F3.

The temperatures $T_i1$ to $T_i3$, and the mass ratios (ethylene/(meth)acrylate) of ethylene and (meth)acrylate in the flows F1 to F3 can suitably be set.

The ratios R1 to R3 are not limited, but the ratio (a mass flow of the flows fed to the upper reaction region/a mass flow of the flow fed to the lower reaction region) of the flows fed to the upper reaction region to the flow fed to the lower reaction region may be, for example 1/3 to 3/1, 1/2 to 2/1, 2/3 to 3/2, or 1/1/.

Then, the initiators are fed through the lines L6 and L7 to the reactor 10. The initiators may be the above-mentioned initiators. The initiator fed from the line L6 and the initiator fed from the line L7 may be identical or different.

In the reactor 10, ethylene and (meth)acrylate are polymerized under such a condition that $\Delta T_2$ calculated by the following expression (Ia) becomes 150°C or higher.

$$\Delta T_2 = T4 \, [°C] - (R1 \times T_i1 \, [°C] + R2 \times T_i2 \, [°C] + R3 \times T_i3 \, [°C]) \tag{Ia}$$

The $\Delta T_2$ may be, for example, 155°C or higher, 160°C or higher, or 165°C or higher. The $\Delta T_2$ may be, for example, 200°C or lower, 195°C or lower, or 190°C or lower.

The pressure in the reactor 10 is not limited, but can be set to, for example, 160 to 200 MPa.

$\Delta T_1$ calculated by the following expression (IIa) is preferably 12°C or higher.

$$\Delta T_1 = T4 \, [°C] - T3 \, [°C] \quad ... \quad (IIa)$$

The $\Delta T_1$ may be, for example, 14°C or higher, 16°C or higher, or 18°C or higher. The $\Delta T_1$ may be, for example, 30°C or lower, 28°C or lower, or 25°C or lower.

The T4 may be, for example, 200°C or higher, 210°C or higher, or 220°C or higher. The T4 may be, for example, 300°C or lower, 275°C or lower, or 250°C or lower.

The T3 may be, for example, 188°C or higher, 198°C or higher, or 208°C or higher. The T3 may be, for example, 288°C or lower, 263°C or lower, or 238°C or lower.

Then, the T1 and the T2 can be set to, for example, 200 to 250°C.

An obtained ethylene-(meth)acrylate copolymer is extracted through the line LB, and thereafter, as required, refined.

[Method for producing the composition]

The composition according to the present embodiments can be produced, for example, by a method comprising a granulation step of granulating (for example, pelletizing) the ethylene-methyl methacrylate copolymer, and an adhesion step of adhering a silicon compound on the obtained particle. The granulation step and the adhesion step may be carried out in this order, or may be carried out simultaneously.

A specific example of the method includes a method in which the composition containing the ethylene-methyl methacrylate copolymer is fed to an extruder, and thereafter, the composition extruded from the extruder is cut while being cooled by a cooling water containing the silicon compound.

Hitherto, suitable embodiments of the present invention have been described, but the present invention is not limited thereto.

The present disclosure relates to the following aspects.

[1] An ethylene-(meth)acrylate copolymer, having a decomposition onset temperature, as measured by thermogravimetry-differential thermal analysis under the conditions under air and at a temperature-rise rate of 20.0°C/min, of 350°C or higher.

[2] The ethylene-(meth)acrylate copolymer according to [1], wherein the ethylene-(meth)acrylate copolymer has a weight-average molecular weight Mw of 90,000 or lower and a content of the structural unit derived from (meth)acrylate of 20 to 30% by mass.

[3] A composition, comprising a polymer particle comprising the ethylene-(meth)acrylate copolymer according to [1] or [2], and a silicon compound adhered on a surface of the polymer particle.

[4] The composition according to [3], wherein the composition contains 20 ppm by mass or more in terms of dimethylsiloxane of the silicon compound with respect to a mass of the polymer particle.

[5] The ethylene-(meth)acrylate copolymer according to [1] or [2], wherein the ethylene-(meth)acrylate copolymer is an ethylene-methyl methacrylate copolymer.

[6] A method for producing an ethylene-(meth)acrylate copolymer, the method comprising polymerizing ethylene and (meth)acrylate in a tank reactor having an upper reaction region and a lower reaction region wherein a fluid flows from the upper reaction region to the lower reaction region, wherein to the tank reactor, flows F1 to Fn (n is an integer of 2 or more) containing ethylene and (meth)acrylate are fed in respective ratios of R1 to Rn and respective temperatures $T_i1$ to $T_in$; and the temperature is measured at a position downstream from the middle point in the flow direction of the lower reaction region, and with the temperature being represented by T4, $\Delta T_2$ calculated by the following expression (I) is 150°C or higher:

[Expression 3]

$$\Delta T_2 = T4 [°C] - \sum_{k=1}^{n} (Rk \times T_ik [°C]) \qquad \cdots (I)$$

wherein the ratio Rk (k is an integer of 1 or more and n or less) represents a mass flow of the flow Fk with respect to a total mass flow of the flows F1 to Fn.

[7] The method for producing an ethylene-(meth)acrylate copolymer according to [6], wherein at least one of the flows F1 to Fn is fed to the upper reaction region, and at least one of the flows F1 to Fn is fed to the lower reaction region.

[8] The method for producing an ethylene-(meth)acrylate copolymer according to [6] or [7], wherein n is 3 or more.

[9] The method for producing an ethylene-(meth)acrylate copolymer according to any one of [6] to [8], wherein the temperature is measured at a position upstream from the middle point in the flow direction of the lower reaction region, and with the temperature being represented by T3, $\Delta T_1$ calculated by the following expression (II) is 12°C or higher:

$$\Delta T_1 = T4 [°C] - T3 [°C] \quad \cdots (II)$$

Examples

Hereinafter, the present invention will be described more specifically based on Examples, but the present invention is not any more limited to the following Examples.

[Example 1]

Ethylene and methyl methacrylate were copolymerized by using a production apparatus of Figure 1 to thereby produce an ethylene-methyl methacrylate copolymer. For a raw material to be fed to inlet ports 10t, 10a and 10b, the composition was made to have an ethylene/methyl methacrylate ratio (mass ratio) of 15.7 and the pressure was set to 169 MPa.

3/8 in the total mass flow per unit time of the raw material to be fed to a reactor 10 was fed from the inlet port 10t; 1/8 therein, from the inlet port 10a; and 4/8 therein, from the inlet port 10b. That is, ratios R1, R2 and R3 of flows F1, F2 and F3 were set to 3/8, 1/8 and 4/8, respectively. The temperatures at which the raw material was fed were 60°C for the inlet port 10t ($T_i1$), 60°C for the inlet port 10a ($T_i2$) and 92°C for the inlet port 10b ($T_i3$).

Then, t-butyl peroxypivalate was fed from an inlet port 10c, and a mixture of t-butyl peroxy-2-ethylhexanoate and t-butyl peroxyisopropylcarbonate was fed from an inlet port 10d.

The reaction pressure in the reactor was set to 169 MPa. Temperatures in the reactor were measured by thermometers TR1 to TR4. The temperature of the thermometer TR1 was represented by T1; that of the thermometer TR2, by T2; that of the thermometer TR3, by T3; and that of the thermometer TR4, by T4, and these temperatures are shown in Table 1. The T3 was a temperature measured at a position upstream of the middle point in the flow direction of the lower reaction region, and the T4 was a temperature measured at a position downstream of the middle point in the flow direction of the lower reaction region.

The T4, which was a reaction temperature in the vicinity of an outlet port 10e (polymer extraction port) of the lower part of the reactor, was 234°C. Then, when the difference (T4 [°C] - T3 [°C]) between the T4 and the T3 of the lower reaction region in the tank reactor was represented by $\Delta T_1$, $\Delta T_1$ was 20.5°C. $\Delta T_2$ calculated from the ratios (R1 to R3) and the temperatures ($T_i1$ to $T_i3$) of the raw material fed from the inlet ports 10t, 10a and 10b and the T4 was 157.8°C.

Here, the $\Delta T_2$ was calculated as follows.

$\Delta T_2 = T4 [°C] - (R1 \times T_i1 [°C] + R2 \times T_i2 [°C] + R3 \times T_i3 [°C])$

The formed ethylene-methyl methacrylate copolymer was fed through the line LB to an extruder. The copolymer extruded from the extruder was cut while being cooled by a cooling water containing a silicon compound, to thereby be pelletized. Thereby, there were obtained pellets containing the ethylene-methyl methacrylate copolymer particle and the silicon compound adhered on the surface of the particle. As the cooling water containing the silicon compound, used was a cooling water containing 0.82 L of DETACK Fortis EC9052A (component containing the silicon compound) with respect to a mass of 1 ton of the ethylene-methyl methacrylate copolymer. The amount of the silicon compound in the obtained pellets was 40 ppm by mass in terms of dimethylsiloxane with respect to the mass of the copolymer particles.

[Example 2]

Ethylene and methyl methacrylate were copolymerized by using the production apparatus of Figure 1 to thereby produce an ethylene-methyl methacrylate copolymer. For a raw material to be fed to inlet ports 10t, 10a and 10b, the composition was made to have an ethylene/methyl methacrylate ratio (mass ratio) of 18.2 and the pressure was set to 170 MPa.

3/8 in the total mass flow per unit time of the raw material to be fed to the reactor 10 was fed from the inlet port 10t; 1/8 therein, from the inlet port 10a; and 4/8 therein, from the inlet port 10b. That is, ratios R1, R2 and R3 of flows F1, F2 and F3 were set to 3/8, 1/8 and 4/8, respectively. The temperatures at which the raw material was fed were 59°C for the inlet port 10t ($T_i1$), 60°C for the inlet port 10a ($T_i2$) and 91°C for the inlet port 10b ($T_i3$).

Then, t-butyl peroxypivalate was fed from the inlet port 10c, and a mixture of t-butyl peroxy-2-ethylhexanoate and t-butyl peroxyisopropylcarbonate was fed from the inlet port 10d.

The reaction pressure in the reactor was set to 170 MPa. As in Example 1, the temperatures T1, T2, T3 and T4 were measured, and the $\Delta T_1$ and the $\Delta T_2$ were calculated. The results are shown in Table 1.

The formed ethylene-methyl methacrylate copolymer was fed through the line LB to an extruder. The copolymer extruded from the extruder was cut while being cooled by a cooling water containing a silicon compound, to thereby be pelletized. Thereby, there were obtained pellets containing the ethylene-methyl methacrylate copolymer particle and the silicon compound adhered on the surface of the particle. As the cooling water containing the silicon compound, used was a cooling water containing 0.35 L of DETACK Fortis EC9052A (component containing the silicon compound) with respect to a mass of 1 ton of the ethylene-methyl methacrylate copolymer. The amount of the silicon compound in the obtained pellets was 4 ppm by mass in terms of dimethylsiloxane with respect to the mass of the copolymer particles.

[Example 3]

Ethylene and methyl methacrylate were copolymerized by using the production apparatus of Figure 1 to thereby produce an ethylene-methyl methacrylate copolymer. For a raw material to be fed to inlet ports 10t, 10a and 10b, the composition was made to have an ethylene/methyl methacrylate ratio (mass ratio) of 23.2 and the pressure was set to 175 MPa.

3/8 in the total mass flow per unit time of the raw material to be fed to the reactor 10 was fed from the inlet port 10t; 1/8 therein, from the inlet port 10a; and 4/8 therein, from the inlet port 10b. That is, ratios R1, R2 and R3 of flows F1, F2 and F3 were set to 3/8, 1/8 and 4/8, respectively. The temperatures at which the raw material was fed were 60°C for the inlet port 10t ($T_i1$), 60°C for the inlet port 10a ($T_i2$) and 83°C for the inlet port 10b ($T_i3$).

Then, t-butyl peroxypivalate was fed from the inlet port 10c, and a mixture of t-butyl peroxy-2-ethylhexanoate and t-butyl peroxyisopropylcarbonate was fed from the inlet port 10d.

The reaction pressure in the reactor was set to 175 MPa. As in Example 1, the temperatures T1, T2, T3 and T4 were measured, and the $\Delta T_1$ and the $\Delta T_2$ were calculated. The results are shown in Table 1.

The formed ethylene-methyl methacrylate copolymer was fed through the line LB to an extruder. Pellets were fabricated as in Example 1, except for using a cooling water having no DETACK Fortis EC9052A (component containing a silicon compound) added thereto. That is, the copolymer extruded from the extruder was cut while being cooled by the cooling water containing no silicon compound to thereby obtain ethylene-methyl methacrylate copolymer particles (pellets) having no silicon compound adhered thereon.

[Example 4]

Ethylene and methyl methacrylate were copolymerized by using the production apparatus of Figure 1 to thereby produce an ethylene-methyl methacrylate copolymer. For a raw material to be fed to inlet ports 10t, 10a and 10b, the composition was made to have an ethylene/methyl methacrylate ratio (mass ratio) of 45.6 and the pressure was set to 191 MPa.

3/8 in the total mass flow per unit time of the raw material to be fed to the reactor 10 was fed from the inlet port 10t;

1/8 therein, from the inlet port 10a; and 4/8 therein, from the inlet port 10b. That is, ratios R1, R2 and R3 of flows F1, F2 and F3 were set to 3/8, 1/8 and 4/8, respectively. The temperatures at which the raw material was fed were 57°C for the inlet port 10t ($T_i1$), 60°C for the inlet port 10a ($T_i2$) and 59°C for the inlet port 10b ($T_i3$).

Then, t-butyl peroxypivalate was fed from the inlet port 10c, and a mixture of t-butyl peroxy-2-ethylhexanoate and t-butyl peroxyisopropylcarbonate was fed from the inlet port 10d.

The reaction pressure in the reactor was set to 191 MPa. As in Example 1, the temperatures T1, T2, T3 and T4 were measured, and the $\Delta T_1$ and the $\Delta T_2$ were calculated. The results are shown in Table 1.

The formed ethylene-methyl methacrylate copolymer was fed through the line LB to an extruder. Pellets were fabricated as in Example 1, except for using a cooling water having no DETACK Fortis EC9052A (component containing a silicon compound) added thereto. That is, the copolymer extruded from the extruder was cut while being cooled by the cooling water containing no silicon compound to thereby obtain ethylene-methyl methacrylate copolymer particles (pellets) having no silicon compound adhered thereon.

[Comparative Example 1]

Ethylene and methyl methacrylate were copolymerized by using the production apparatus of Figure 1 to thereby produce an ethylene-methyl methacrylate copolymer. For a raw material to be fed to inlet ports 10t, 10a and 10b, the composition was made to have an ethylene/methyl methacrylate ratio (mass ratio) of 21.6 and the pressure was set to 155 MPa.

3/8 in the total mass flow per unit time of the raw material to be fed to the reactor 10 was fed from the inlet port 10t; 1/8 therein, from the inlet port 10a; and 4/8 therein, from the inlet port 10b. That is, ratios R1, R2 and R3 of flows F1, F2 and F3 were set to 3/8, 1/8 and 4/8, respectively. The temperatures at which the raw material was fed were 60°C for the inlet port 10t ($T_i1$), 60°C for the inlet port 10a ($T_i2$) and 87°C for the inlet port 10b ($T_i3$).

Then, t-butyl peroxypivalate was fed from the inlet ports 10c and 10d.

The reaction pressure in the reactor was set to 155 MPa. As in Example 1, the temperatures T1, T2, T3 and T4 were measured, and the $\Delta T_1$ and the $\Delta T_2$ were calculated. The results are shown in Table 1.

The formed ethylene-methyl methacrylate copolymer was fed through the line LB to an extruder. Pellets were fabricated as in Example 1, except for using a cooling water having no DETACK Fortis EC9052A (component containing a silicon compound) added thereto. That is, the copolymer extruded from the extruder was cut while being cooled by the cooling water containing no silicon compound to thereby obtain ethylene-methyl methacrylate copolymer particles (pellets) having no silicon compound adhered thereon.

[Comparative Example 2]

Ethylene and methyl methacrylate were copolymerized by using the production apparatus of Figure 1 to thereby produce an ethylene-methyl methacrylate copolymer. For a raw material to be fed to inlet ports 10t, 10a and 10b, the composition was made to have an ethylene/methyl methacrylate ratio (mass ratio) of 18.4 and the pressure was set to 155 MPa.

3/8 in the total mass flow per unit time of the raw material to be fed to the reactor 10 was fed from the inlet port 10t; 1/8 therein, from the inlet port 10a; and 4/8 therein, from the inlet port 10b. That is, ratios R1, R2 and R3 of flows F1, F2 and F3 were set to 3/8, 1/8 and 4/8, respectively. The temperatures at which the raw material was fed were 60°C for the inlet port 10t ($T_i1$), 60°C for the inlet port 10a ($T_i2$) and 86°C for the inlet port 10b ($T_i3$).

Then, t-butyl peroxypivalate was fed from the inlet ports 10c and 10d.

The reaction pressure in the reactor was set to 155 MPa. As in Example 1, the temperatures T1, T2, T3 and T4 were measured, and the $\Delta T_1$ and the $\Delta T_2$ were calculated. The results are shown in Table 1.

The formed ethylene-methyl methacrylate copolymer was fed through the line LB to an extruder. The copolymer extruded from the extruder was cut while being cooled by a cooling water containing no silicon compound, as in Example 3, to thereby obtain ethylene-methyl methacrylate copolymer particles having no silicon compound adhered thereon. Chemipearl V200 (manufactured by Mitsui Chemicals, Inc.) was directly sprayed on the obtained particles to thereby obtain pellets on which 800 ppm by mass of the Chemipearl was adhered with respect to the mass of the copolymer particles.

[Comparative Example 3]

Ethylene and methyl methacrylate were copolymerized by using the production apparatus of Figure 1 to thereby produce an ethylene-methyl methacrylate copolymer. For a raw material to be fed to inlet ports 10t, 10a and 10b, the composition was made to have an ethylene/methyl methacrylate ratio (mass ratio) of 18.3 and the pressure was set to 195 MPa.

3/8 in the total mass flow per unit time of the raw material to be fed to the reactor 10 was fed from the inlet port 10t; 1/8 therein, from the inlet port 10a; and 4/8 therein, from the inlet port 10b. That is, ratios R1, R2 and R3 of flows F1, F2 and F3 were set to 3/8, 1/8 and 4/8, respectively. The temperatures at which the raw material was fed were 57°C for the inlet port 10t ($T_i$1), 55°C for the inlet port 10a ($T_i$2) and 53°C for the inlet port 10b ($T_i$3).

Then, t-butyl peroxypivalate was fed from the inlet ports 10c and 10d.

The reaction pressure in the reactor was set to 195 MPa. As in Example 1, the temperatures T1, T2, T3 and T4 were measured, and the $\Delta T_1$ and the $\Delta T_2$ were calculated. The results are shown in Table 1.

The formed ethylene-methyl methacrylate copolymer was fed through the line LB to an extruder, and pelletized by an under water cut method. Pelletization was carried out without adding the DETACK Fortis EC9052A to the cooling water, and thereafter, Chemipearl V200 (manufactured by Mitsui Chemicals, Inc.) was directly sprayed on the pellets to thereby obtain pellets on which 800 ppm by mass of the Chemipearl was adhered.

The formed ethylene-methyl methacrylate copolymer was fed through the line LB to an extruder. The copolymer extruded from the extruder was cut while being cooled by a cooling water containing no silicon compound, as in Example 3, to thereby obtain ethylene-methyl methacrylate copolymer particles (pellets) having no silicon compound adhered thereon.

[Table 1]

|  | Example 1 | Example 2 | Example 3 | Example 4 | Comparative Example 1 | Comparative Example 2 | Comparative Example 3 |
|---|---|---|---|---|---|---|---|
| Reaction pressure [MPa] | 169 | 170 | 175 | 191 | 155 | 155 | 195 |
| T1 [°C] | 202 | 210 | 208 | 232 | 189 | 188 | 203 |
| T2 [°C] | 208 | 208 | 207 | 243 | 199 | 198 | 205 |
| T3 [°C] | 213 | 217 | 218 | 228 | 181 | 180 | 194 |
| T4 [°C] | 234 | 236 | 236 | 241 | 192 | 191 | 203 |
| Inlet port 10t feed temperature ($T_i$1) [°C] | 60 | 59 | 60 | 57 | 60 | 60 | 57 |
| Inlet port 10a feed temperature ($T_i$2) [°C] | 60 | 60 | 60 | 60 | 60 | 60 | 55 |
| Inlet port 10b feed temperature ($T_i$3) [°C] | 92 | 91 | 83 | 59 | 87 | 86 | 53 |
| $\Delta T_1$ [°C] | 20.5 | 19.3 | 17.5 | 13.2 | 10.6 | 11.0 | 8.6 |
| $\Delta T_2$ [°C] | 157.8 | 160.5 | 164.6 | 182.5 | 117.8 | 118.1 | 148.1 |

(Evaluations)

The obtained pellets were evaluated based on the following. The results are shown in Table 2.

[Decomposition onset temperature]

The decomposition onset temperature could be determined by using a weight loss curve obtained by measurement, using a high-temperature type simultaneous thermogravimetric and differential thermal analyzer, under the conditions under the air atmosphere, at a flow rate of 200 ml/min and at a temperature-rise rate of 20.0°C/min and taking, as the decomposition onset temperature, a temperature of the intersection of a line of the mass before the measurement initiation and the maximum gradient tangent of the TG curve, according to JIS K7120.

More specifically, the decomposition onset temperature could be determined based on the procedure of the following 1 to 3.

1: A line (a-b) parallel to an abscissa passing through a mass of 0 before initiation of test heating was drawn.

2: A tangent (c-d) was drawn so that the gradient between inflection points in the TG curve became maximum.

3: The temperature of a point at which the line (a-b) and the tangent (c-d) intersected was taken as the decomposition onset temperature.

[Weight-average molecular weight]

The weight-average molecular weight (Mw) was measured by using gel permeation chromatography (GPC) under the following conditions, and determined by using polystyrenes as the standard material.

Measurement device: HLC-8321 (product name, manufactured by Tosoh Corp., GPC/HT type)
Separation column: two columns of TSKgel GMH6-HT (column size: inner diameter: 7.5 mm, length: 300 mm) and two columns of TSKgel GMH6-HTL (column size: inner diameter: 7.5 mm, length: 300 mm)
Column temperature: 140°C
Mobile phase: orthodichlorobenzene (manufactured by Wako Pure Chemical Industries, Ltd.) (containing 0.025% by weight of BHT (manufactured by Wako Pure Chemical Industries, Ltd.) as an antioxidant)
Flow rate: 1.0 mL/min
Sample concentration: 30 mg/20 mL
Sample injection volume: 0.4 mL
Detector: differential refractometer
Standard sample: 16 TSK polystyrene standards, manufactured by Tosoh Corp.

The calculation of the molecular weight used data processing software, Empower3, manufactured by Waters Corp.

[Content (unit: % by mass) of the structural unit derived from methyl methacrylate (MMA)]

The content (MMA content) of the structural unit derived from methyl methacrylate (MMA) was determined by fabricating a pressed sheet, measuring an infrared absorption spectrum thereof, and correcting the absorbance of the characteristic absorption of the carbonyl group (C=O) emerging around 1,700 $cm^{-1}$ of the measured spectrum with the thickness of the sheet, and by using a calibration curve method.

[Quantitative determination of the amount (unit: ppm by mass) of the silicon compound]

35 mL of diethyl ether and 5 mL of a saturated NaCl solution were added to 1 g of the pellets and shaking extraction was carried out. An obtained solution was filtered to obtain a filtrate. The obtained filtrate was evaporated, and thereafter, a residue was dissolved in kerosine to obtain a kerosine solution. ICP-AES measurement of the obtained kerosine solution was carried out. On the other hand, a calibration curve was fabricated by using a polydimethylsiloxane, KF-96-100CS, manufactured by Shin-Etsu Chemical Co. Ltd. By using this calibration curve, the amount in terms of dimethylsiloxane of the silicon compound adhered on the pellets was calculated. The amount of the silicon compound in Table 2 represents an amount (unit: ppm by mass) in terms of dimethylsiloxane of the silicon compound with respect to the mass of the ethylene-methyl methacrylate copolymer particles.

[Evaluation method of fish eyes (FE)]

A resin was melt kneaded by using a single-flight screw extruder of 30 mm in diameter, and 28 in L/D (L was the length of the cylinder of the extruder, and D was the diameter thereof) at 170°C for Example 4 and 130°C for the other Examples, and extruded from a cast die (250 mm in width) whose temperature was controlled at 170°C for Example 4 and 130°C for the other Examples, and thereafter taken up by a chill roll at 20°C to be cooled and solidified, and wound up as a cast film of 100 $\mu$m in total thickness. The number (number of FE counted) of fish eyes (FE) of 200 $\mu$m or larger in diameter of the obtained film was measured by using a desktop CCD camera defect detector (manufactured by Mamiya-OP Co. Ltd.) and by spreading the sample film on the stage of the detector. The measurement area was set to 16.35 cm $\times$ 12 cm (0.02 $m^2$) and the amount of light was set to 70. It is preferable that the number of FE counted (unit: number/0.02 $m^2$) is smaller.

[Melt flow rate (MFR) (unit: g/10 min)]

The melt flow rate (MFR) was measured according to the method prescribed in JIS K7210-1995 under the conditions of at a load of 21.18 N and at a temperature of 190°C.

[Internal Haze (unit: %)]

The obtained pellets were molded into a pressed sheet of 1 mm in thickness by using a compression molding machine, NF-37HH/C type (two-stage type of heating/cooling), manufactured by Shinto Metal Industries, Ltd., under the conditions of heating temperature: 150°C, preheating time: 5 min, heating time: 5 min, pressure in pressing: 5 MPa, cooling temperature: 30°C and cooling time: 5 min. By using the molded pressed sheet, the internal Haze, which is a measure of the transparency, was measured by a digital haze meter (manufactured by Suga Test Instruments Co. Ltd.). The internal Haze was calculated by immersing a pressed sheet sample in a dimethyl phthalate solution filled in a quartz cell and measuring the Haze of the whole cell.

[Amount mutually adhered]

120 g of the pellets was charged in a cylinder of 7.5 cm in diameter and 8 cm in height, and allowed to stand still in an oven at 40°C for 4 days. Thereafter, a piston of 7.3 cm in diameter and 42 $cm^2$ in area and a weight of 1 kg were placed on the cylinder, and allowed to stand still in an oven at 5°C for 2 days. After the still standing, the cylinder was taken out from the oven at 5°C, and the piston and the weight were removed; and when the cylinder was lifted, whether the pellets were mutually adhered was visually observed, and was evaluated under the following criteria.

A: There was no mutual adhesion at all.
B: Slight mutual adhesion of several pellets was observed.
C: Small mutually adhered lumps were observed.

[Table 2]

|  | Example 1 | Example 2 | Example 3 | Example 4 | Comparative Example 1 | Comparative Example 2 | Comparative Example 3 |
|---|---|---|---|---|---|---|---|
| Decomposition onset temperature [°C] | 384.6 | 364.1 | 356.4 | 389.5 | 343.9 | 346.4 | 346.9 |
| Weight-average molecular weight (Mw) | 72200 | 66800 | 121000 | 244000 | 70000 | 82930 | 112400 |
| MMA content [% by mass] | 25 | 23 | 20 | 10 | 25 | 28 | 25 |
| Silicon compound amount [ppm by mass] | 40 | 4 | 0 | 0 | 0 | 0 | 0 |
| FE number counted [number/0.02 $m^2$] | 42 | 45 | 15 | 2 | 691 | 340 | 120 |
| MFR [g/10 min] | 150 | 180 | 20 | 2 | 150 | 150 | 20 |
| Internal Haze [%] | 2.1 | 0.8 | 1.8 | 14 | 8.6 | 2.3 | 0.3 |
| Amount mutually adhered | A | B | A | A | B | C | B |

Reference Signs List

5 ... baffle, 10 ... reactor, 10t, 10a, 10c, 10b, 10d ... inlet port, 10e ... outlet port, 100 ... production apparatus, LB, L1, L2, L3, L4, L5, L6, L7 ... line, HE1, HE2, HE3 ... heat exchanger, TR1, TR2, TR3, TR4 ... thermometer.

**Claims**

1. An ethylene-(meth)acrylate copolymer, having a decomposition onset temperature, as measured by thermogravimetry-differential thermal analysis under the conditions under air and at a temperature-rise rate of 20.0°C/min, of 350°C or higher.

2. The ethylene-(meth)acrylate copolymer according to claim 1, wherein the ethylene-(meth)acrylate copolymer has a weight-average molecular weight Mw of 90,000 or lower and a content of the structural unit derived from (meth) acrylate of 20 to 30% by mass.

3. A composition, comprising a polymer particle comprising an ethylene-(meth)acrylate copolymer according to claim 1 or 2, and a silicon compound adhered on a surface of the polymer particle.

4. The composition according to claim 3, wherein the composition contains 20 ppm by mass or more in terms of dimethylsiloxane of the silicon compound with respect to a mass of the polymer particle.

5. The ethylene-(meth)acrylate copolymer according to claim 1 or 2, wherein the ethylene-(meth)acrylate copolymer is an ethylene-methyl methacrylate copolymer.

6. A method for producing an ethylene-(meth)acrylate copolymer, the method comprising polymerizing ethylene and (meth)acrylate in a tank reactor having an upper reaction region and a lower reaction region wherein a fluid flows from the upper reaction region to the lower reaction region,

    wherein to the tank reactor, flows F1 to Fn (n is an integer of 2 or more) containing ethylene and (meth)acrylate are fed in respective ratios of R1 to Rn and respective temperatures $T_i1$ to $T_in$; and
    wherein the temperature is measured at a position downstream from the middle point in the flow direction of the lower reaction region, and with the temperature being represented by T4, $\Delta T_2$ calculated by the following expression (I) is 150°C or higher:
    [Expression 1]

$$\Delta T_2 = T4[°C] - \sum_{k=1}^{n} (Rk \times T_ik[°C])$$

$$\cdots (I)$$

    wherein the ratio Rk (k is an integer of 1 or more and n or less) represents a mass flow of the flow Fk with respect to a total mass flow of the flows F1 to Fn.

7. The method for producing an ethylene-(meth)acrylate copolymer according to claim 6, wherein at least one of the flows F1 to Fn is fed to the upper reaction region, and at least one of the flows F1 to Fn is fed to the lower reaction region.

8. The method for producing an ethylene-(meth)acrylate copolymer according to claim 6 or 7, wherein n is 3 or more.

9. The method for producing an ethylene-(meth)acrylate copolymer according to claim 6 or 7, wherein the temperature is measured at a position upstream from the middle point in the flow direction of the lower reaction region, and with the temperature being represented by T3, $\Delta T_1$ calculated by the following expression (II) is 12°C or higher:

$$\Delta T_1 = T4 \ [°C] - T3 \ [°C] \ ... \ (II)$$

$$\Delta T_1 = T4 \ [°C] - T3 \ [°C] \ ... \ (II)$$

Fig. 1

## INTERNATIONAL SEARCH REPORT

| International application No. |
| --- |
| **PCT/JP2023/041497** |

| A. | CLASSIFICATION OF SUBJECT MATTER |
| --- | --- |

*C08F 210/02*(2006.01)i; *C08F 2/01*(2006.01)i; *C08F 220/10*(2006.01)i; *C08K 5/54*(2006.01)i; *C08L 23/08*(2006.01)i; *C08L 83/10*(2006.01)i
FI:   C08F210/02; C08F2/01; C08F220/10; C08K5/54; C08L23/08; C08L83/10

According to International Patent Classification (IPC) or to both national classification and IPC

| B. | FIELDS SEARCHED |
| --- | --- |

Minimum documentation searched (classification system followed by classification symbols)

C08F210/02; C08F2/01; C08F220/10; C08K5/54; C08L23/08; C08L83/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2009-530439 A (LG CHEM, LTD) 27 August 2009 (2009-08-27) claims, examples | 1, 5 |
| Y | | 3-4 |
| A | | 2, 6-9 |
| X | JP 60-31508 A (SUMITOMO CHEMICAL INDUSTRY COMPANY LIMITED) 18 February 1985 (1985-02-18) claims, examples | 1-2, 5 |
| Y | | 3-4 |
| A | | 6-9 |
| Y | JP 2008-246854 A (SUMITOMO CHEMICAL CO LTD) 16 October 2008 (2008-10-16) claims, paragraph [0011] | 3-4 |
| A | JP 2017-193700 A (UBE-MARUZEN POLYETHYLENE CO LTD) 26 October 2017 (2017-10-26) entire text | 1-9 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 December 2023** | **16 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2023/041497** |

**C.  DOCUMENTS CONSIDERED TO BE RELEVANT**

| Category* | Citation of document, with indication, where appropriate, of the relevant passages | Relevant to claim No. |
| --- | --- | --- |
| A | JP 2004-527595 A (EXXONMOBIL CHEMICAL PATENTS INC) 09 September 2004 (2004-09-09) <br> entire text | 1-9 |

Form PCT/ISA/210 (second sheet) (January 2015)

### INTERNATIONAL SEARCH REPORT
Information on patent family members

| International application No. |
| --- |
| **PCT/JP2023/041497** |

| Patent document cited in search report | | | Publication date (day/month/year) | Patent family member(s) | | | Publication date (day/month/year) |
| --- | --- | --- | --- | --- | --- | --- | --- |
| JP | 2009-530439 | A | 27 August 2009 | US | 2010/0016535 | A1 | |
| | | | | claims, examples | | | |
| | | | | US | 2010/0113723 | A1 | |
| | | | | WO | 2007/105898 | A1 | |
| | | | | WO | 2007/105896 | A1 | |
| | | | | EP | 1994066 | A1 | |
| | | | | EP | 1994067 | A1 | |
| | | | | KR | 10-2007-0093366 | A | |
| | | | | KR | 10-2007-0093367 | A | |
| | | | | CN | 101421322 | A | |
| | | | | CN | 101443369 | A | |
| JP | 60-31508 | A | 18 February 1985 | (Family: none) | | | |
| JP | 2008-246854 | A | 16 October 2008 | (Family: none) | | | |
| JP | 2017-193700 | A | 26 October 2017 | (Family: none) | | | |
| JP | 2004-527595 | A | 09 September 2004 | WO | 2002/057354 | A2 | |
| | | | | whole document | | | |
| | | | | EP | 1409559 | A2 | |
| | | | | TW | 593358 | B | |
| | | | | CN | 1551892 | A | |
| | | | | KR | 10-2003-0072600 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8050810 A
- JP 2020015812 A